# FASCICULE DE BREVET EUROPEEN

(11) **EP 1 112 884 B1**
(45) Date de publication et mention de la délivrance du brevet: **17.09.2003**
(21) Numéro de dépôt: 00403476.5
(22) Date de dépôt: 11.12.2000
(51) Int. Cl.: B60K 6/02, B60L 11/02, F02N 11/04, H02K 7/18, B60K 6/04

(54) **Dispositif de fixation d'un équipement électrique, tel qu'un alternateur-demarreur, dans un carter d'embrayage d'un véhicule automobile**
Befestigungsanordnung für ein elektrisches Gerät, wie ein Starter-Generator, in einem Kupplungsgehäuse eines Kraftfahrzeugs
Mounting device for an electrical equipment, such as a starter-generator, in a vehicle clutch housing

(30) Priorité: 29.12.1999 FR 9916641
(43) Date de publication de la demande: 04.07.2001
(73) Titulaire: Peugeot Citroen Automobiles SA, 92200 Neuilly sur Seine (FR)
(72) Inventeur: Honorio, François, 95490 Vaureal (FR); Hulin, René, 92500 Rueil Malmaison (FR); Chantreau, Marc, 14550 Blainville/Orne (FR); Schumacher, Bernard, 92330 Sceaux (FR)
(74) Mandataire: Thinat, Michel

(56) Documents cités:
- EP-A- 0 621 152
- WO-A-99/22955

## Description

La présente invention concerne un dispositif de fixation d'un équipement électrique, tel qu'un alternateur-démarreur, dans un carter d'embrayage d'un véhicule automobile.

On connaît un tel dispositif selon lequel l'équipement électrique est fixé dans le carter d'embrayage situé entre le carter de boîte de vitesse et le carter moteur du véhicule, l'équipement électrique comprenant un stator fixe solidaire du carter d'embrayage, voir WO 9922955 A.

Cette solution connue a pour inconvénient majeur de nécessiter un entrefer entre rotor et stator relativement important, d'environ 0,8 mm, à cause des problèmes de dilatation du carter d'embrayage, réalisé en aluminium, lors du fonctionnement de l'équipement électrique.

L'invention propose un dispositif permettant de réduire l'entrefer à une valeur déterminée et de s'affranchir des problèmes de dilatation du carter d'embrayage.

A cet effet, selon l'invention, le dispositif de fixation d'un équipement électrique, tel qu'un alternateur-démarreur, dans un carter d'embrayage d'un véhicule automobile, et situé entre le carter de boîte de vitesses et le carter moteur du véhicule, l'équipement électrique comprenant un stator fixe relativement au carter d'embrayage et un rotor pouvant être entraîné en rotation par l'arbre vilebrequin du moteur, l'ensemble comprenant le stator, le rotor et un moyeu de support du rotor monté sur un palier, tel qu'un roulement à billes, logé dans un carter indépendant solidaire du carter d'embrayage, est caractérisé en ce que le carter indépendant est espacé du carter d'embrayage.

De préférence, l'ensemble précité est préassemblé dans le carter indépendant avant fixation de ce carter au carter d'embrayage.

Le palier du moyeu de support du rotor est monté sur une partie centrale cylindrique du carter indépendant entourant coaxialement l'arbre de liaison entre l'arbre vilebrequin et l'arbre d'entrée de la boîte de vitesses.

Le moyeu de support du rotor est relié par des moyens d'accouplement en rotation à un couvercle d'embrayage solidaire du volant d'inertie du moteur.

Selon un premier mode de réalisation, les moyens d'accouplement comprennent une couronne en matériau élastomère, tel que silicone, ayant d'un côté des éléments prismatiques creux à bases rectangulaires, axialement saillants et circulairement espacés, s'encastrant respectivement dans des cavités conjuguées du moyeu de support du rotor et une couronne rigide métallique ayant d'un côté des éléments prismatiques à bases rectangulaires axialement saillants et circulairement espacés s'encastrant respectivement dans les éléments prismatiques creux de la couronne en élastomère, la couronne métallique étant solidaire par son côté opposé du couvercle d'embrayage.

Selon un second mode de réalisation, les moyens d'accouplement comprennent des blocs en matériau élastomère, tel que silicone, encastrés respectivement dans des cavités conjugués circonférentiellement espacées du moyeu de support du rotor et des doigts ou pions solidaires d'un côté du couvercle d'embrayage parallèlement à l'axe de rotation du rotor et circonférentiellement espacés, les doigts ou pions s'engageant respectivement dans des perçages réalisés dans les blocs en élastomère.

De préférence, le carter indépendant comprend une paroi latérale perpendiculaire à l'arbre vilebrequin, raccordée à la partie centrale cylindrique par une paroi oblique et une paroi circulaire s'étendant perpendiculairement de la paroi latérale de façon à définir le logement dans lequel est monté l'ensemble précité par introduction de celui-ci du côté ouvert du carter opposé à la paroi latérale, la paroi circulaire enserrant le stator de l'équipement électrique sur une partie de celui-ci.

Avantageusement, un circuit est prévu pour refroidir l'équipement électrique.

De préférence, le circuit de refroidissement est constitué d'une bande annulaire comprenant une chambre annulaire étanche dans laquelle peut circuler un liquide de refroidissement, tel qu'un mélange d'eau et de l'anti-gel et cette bande annulaire est disposée sur la surface périphérique externe circulaire du stator, est interposée entre la paroi circulaire du carter et une bride annulaire de fixation du stator dans le carter et est maintenue entre ces deux parties par des tirants externes, l'une des extrémités de la bande annulaire étant solidaire d'un tirant et son autre extrémité mobile est reliée au tirant par un ressort.

La bande annulaire est fixée au carter indépendant par des tirants externes parallèles à la paroi circulaire du carter, ancrés d'un côté au carter et traversant de l'autre côté une bride annulaire de fixation du stator dans le carter et venant en appui serré sur le bord circulaire de la bande annulaire à l'opposé du bord circulaire de la paroi circulaire du carter.

Le circuit de refroidissement comprend en outre deux tubulures externes d'amenée et de sortie du liquide de refroidissement dans la chambre annulaire et qui sont raccordés, en communication de fluide, à la bande annulaire.

Le dispositif comprend en outre un fourreau fixé dans la partie centrale cylindrique du carter indépendant et permettant le guidage en translation d'une butée de débrayage.

Selon une variante de réalisation, le moyeu de support du rotor est réalisé en une seule pièce en aluminium.

Selon une autre variante de réalisation, le moyeu de support du rotor comprend deux flasques en tôle fixés l'un à l'autre par sertissage.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple, illustrant plusieurs modes de réalisation de l'invention, et dans lesquels :
- La figure 1 est une vue en coupe longitudinale représentant le dispositif de fixation, conforme à l'invention, d'un équipement électrique dans un carter d'embrayage d'un véhicule automobile ;
- La figure 2 est une vue en coupe semblable à celle de la figure 1 et représentant uniquement le carter d'embrayage dans lequel est fixé l'équipement électrique représenté partiellement ;
- La figure 3 est une vue partielle en coupe agrandie représentant la fixation du carter de logement de l'équipement électrique au carter d'embrayage et le mode de coulissement de la butée de débrayage représentée à ses deux positions d'embrayage et de débrayage ;
- La figure 4 est une vue agrandie en perspective éclatée des moyens permettant d'accoupler le moyeu de support du rotor de l'équipement électrique au volant d'inertie du moteur ;
- La figure 5 est une vue à échelle réduite, suivant la flèche V de la figure 1, des différents carters du moteur ;
- La figure 6 est une vue en coupe partielle suivant la ligne VI-VI de la figure 5 ;
- La figure 7 est une vue en coupe partielle suivant la ligne VII-VII de la figure 5 ;
- La figure 8 est une vue en coupe partielle suivant la ligne VIII-VIII de la figure 5 ;
- La figure 9 est une vue externe en perspective agrandie d'une partie de l'équipement électrique et de son carter de logement avec un circuit de refroidissement de cet équipement ;
- La figure 10 est une vue de face d'une bande annulaire destinée à définir une chambre de refroidissement du circuit de refroidissement ;
- La figure 11 est une vue de face d'une variante de réalisation du moyen de support du rotor de l'équipement électrique ;
- La figure 12 est une vue en coupe suivant la ligne XII - XII de la figure 11 ;
- La figure 13 est une vue en coupe suivant la ligne XIII - XIII de la figure 11, et
- La figure 14 est une vue en coupe semblable à celle de la figure 1 et représentant un autre mode de réalisation du dispositif de fixation de l'invention.

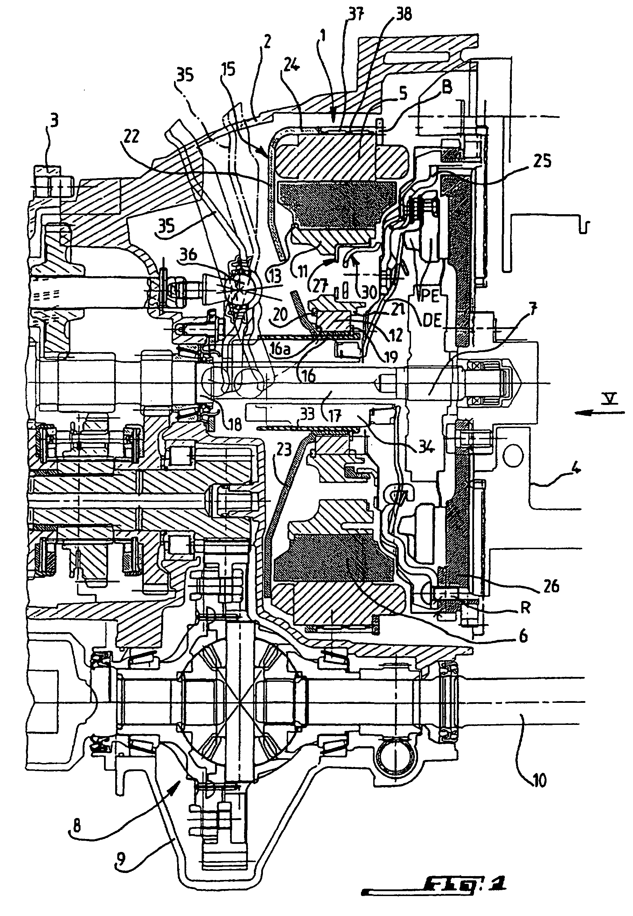

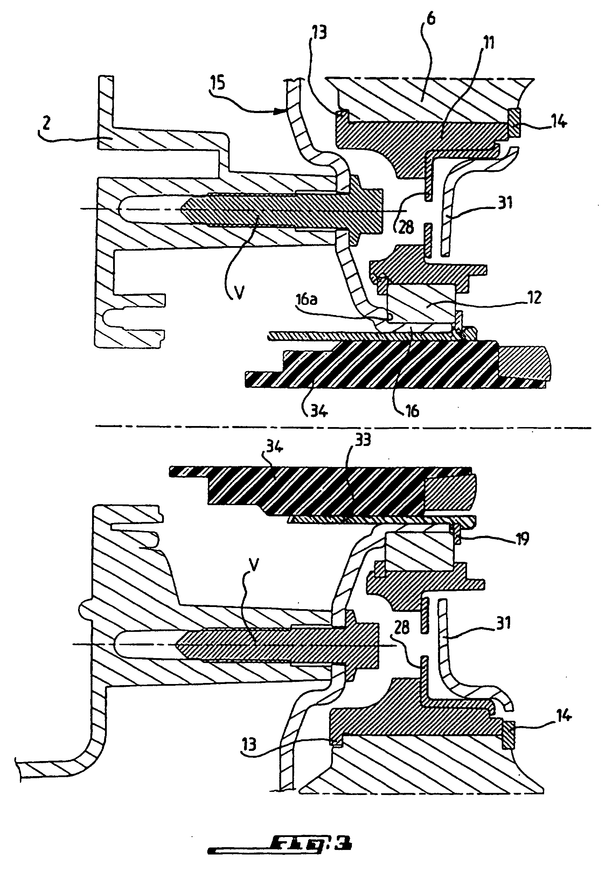

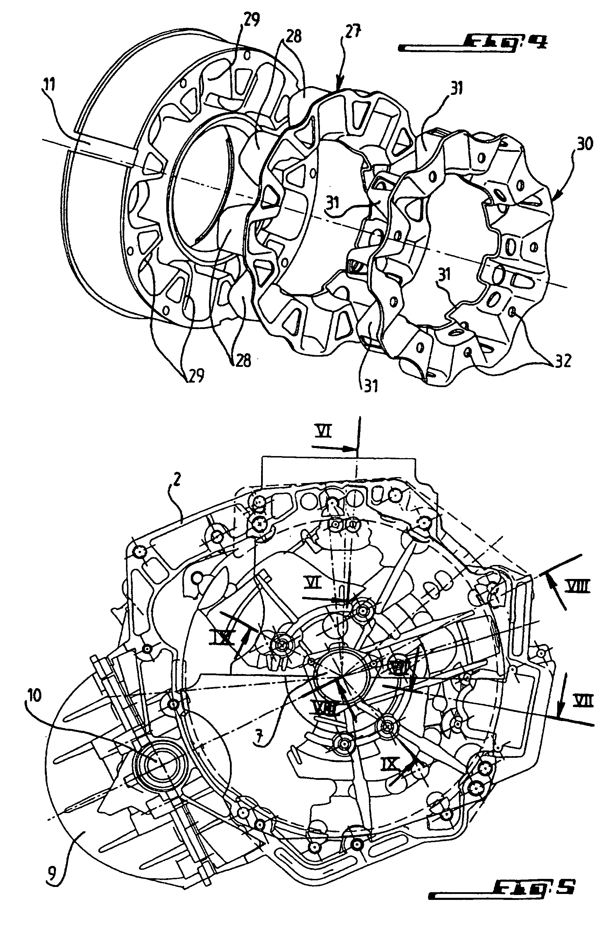

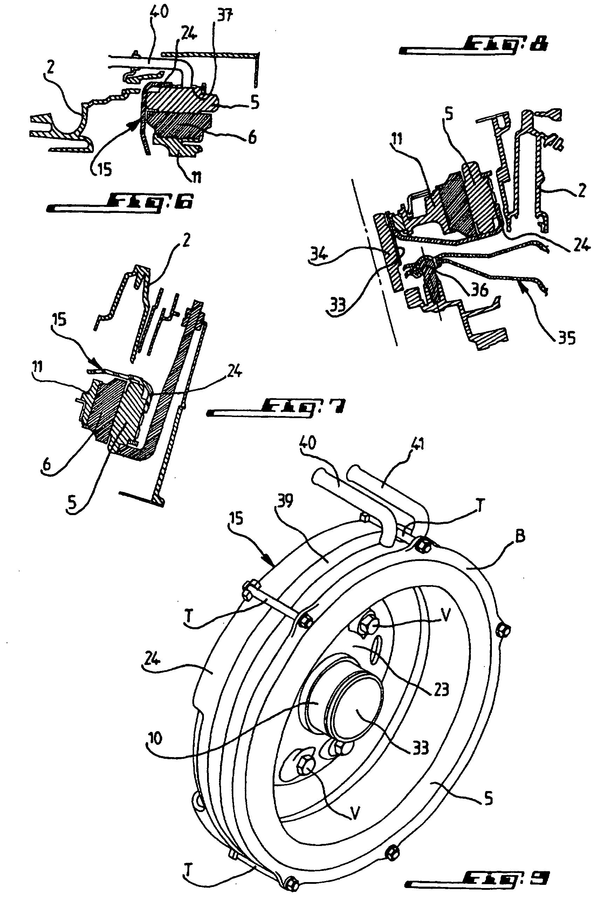

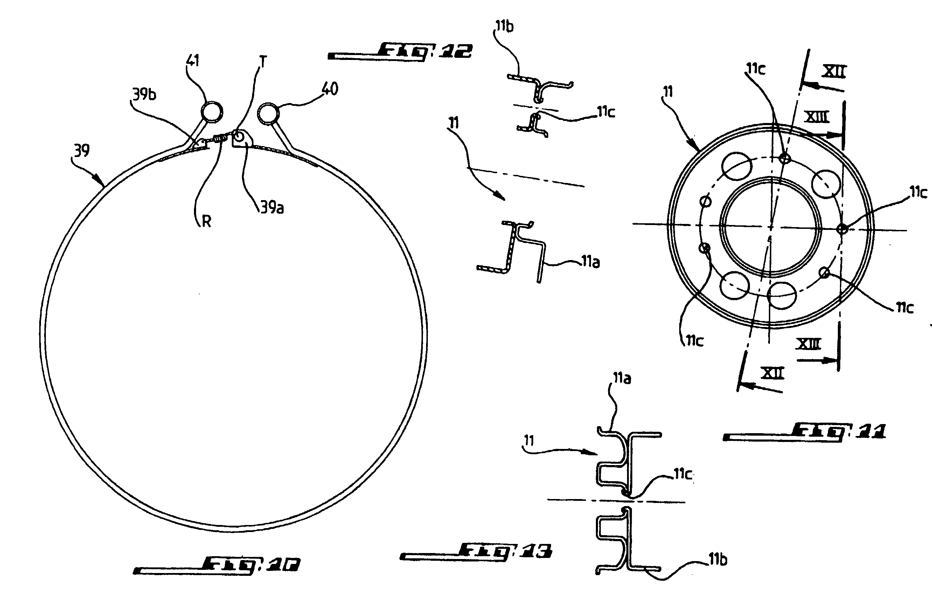

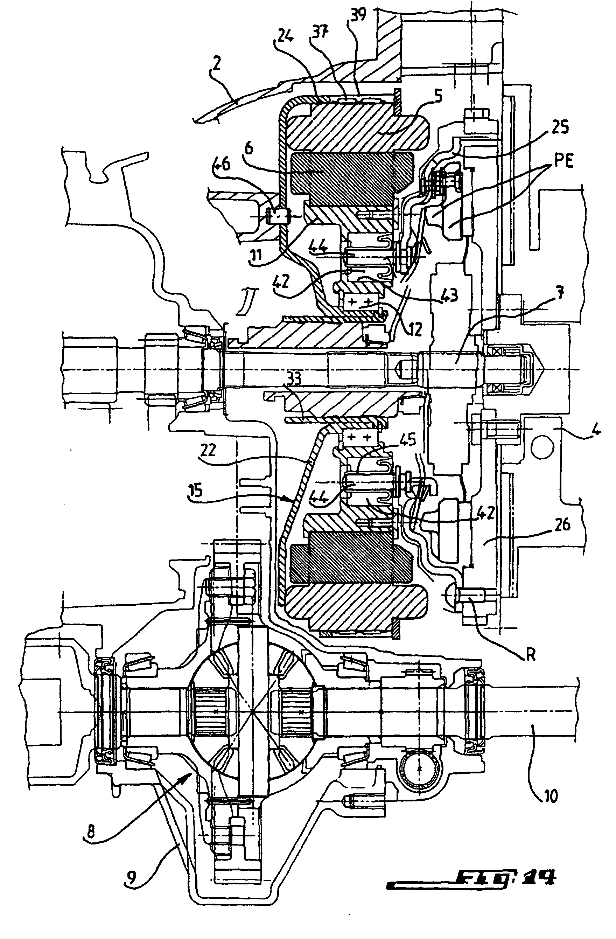

Les figures 1 à 10 représentent le premier mode de réalisation du dispositif de fixation d'un équipement électrique 1, tel qu'un alternateur-démarreur, dans un carter d'embrayage 2 fixé entre le carter 3 de boîte de vitesse et le carter 4 du moteur thermique d'un véhicule automobile.

Un appareil électrique formant à la fois un alternateur et un démareur de véhicule, connu en soi est, par exemple, décrit dans la demande de brevet internationale WO 99/22955.

Ainsi, l'alternateur-démarreur 1, qui est représenté schématiquement aux figures, comprend essentiellement un stator annulaire 5 fixe relativement au carter d'embrayage 2 et un rotor annulaire 6 logé dans le stator fixe 5 en définissant par rapport à ce dernier un entrefer.

Le rotor 6 est entraîné en rotation par l'arbre vilebrequin 7 du moteur thermique comme on le verra ultérieurement.

Les différents composants situés dans la boîte de vitesses 3 sont déjà connus en soi et n'ont pas besoin d'être décrits à part que la référence 8 désigne le différentiel du véhicule logé dans un carter 9 et que l'axe de roue porte la référence 10.

Comme représenté, le rotor 6 est monté de façon solidaire sur un moyen de support 11 lui-même monté à rotation sur un palier 12, tel qu'un roulement à billes.

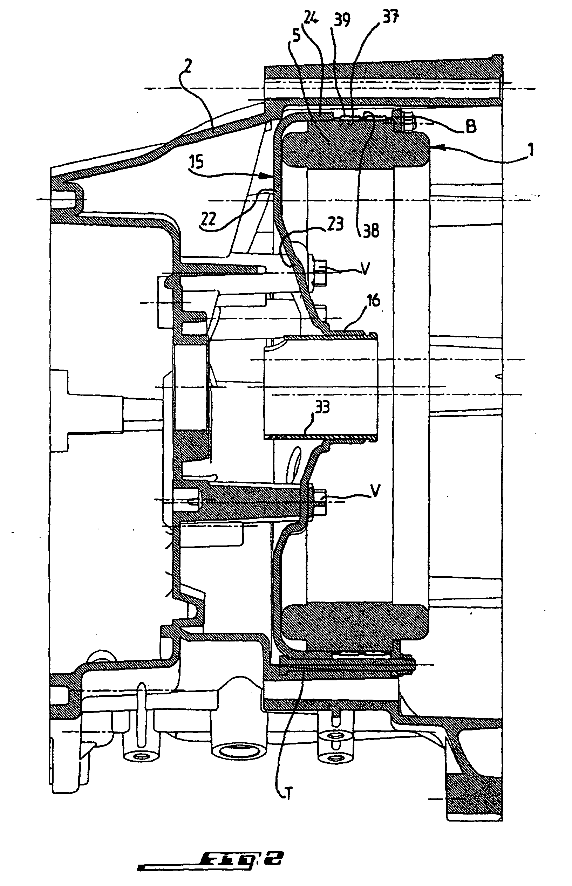

Le rotor 6 est maintenu axialement sur le moyen 11 d'un côté par un épaulement 13 du moyeu 11 et de l'autre par une bague annulaire 14, visible en figure 3.

Selon l'invention, l'ensemble constitué par le stator 5, le rotor 6, le moyeu 11 et le palier 12 est logé dans un carter indépendant 15 fixé par une partie de celui-ci au carter d'embrayage 2 par des vis de fixation V comme cela ressort clairement de la figure 3 de façon que le carter 15 soit logé dans le carter d'embrayage 2 en étant espacé de ce dernier, c'est-à-dire sans être en contact avec celui-ci, mis à part les emplacements de fixation par les vis V de la partie du carter 15 au carter d'embrayage 2.

Le carter 15 comprend une partie centrale tubulaire 16 entourant coaxialement une partie de liaison 17 de l'arbre vilebrequin 7 à l'arbre d'entrée 18 de la boîte de vitesses 3. Le palier 12 est monté sur la partie centrale tubulaire en étant maintenu axialement sur celui-ci par un épaulement de butée 16a situé à une extrémité de la partie 16 et un circlips 19 au voisinage de l'extrémité de celle-ci comme on le verra ultérieurement. Le moyeu 11 est en outre maintenu axialement sur le palier 12 d'une part par un circlips 20 logé dans une gorge interne du moyeu et d'autre part par un épaulement 21 du moyeu 11 en appui sur le palier 12.

Le carter 15 comprend également une paroi latérale 22 s'étendant perpendiculairement à l'axe de l'arbre vilebrequin 7 et raccordée à la partie centrale tubulaire 16 par une paroi oblique 23. Le carter 15 comprend une paroie circulaire 24 prolongeant la partie supérieure de la paroi latérale 15 en s'étendant perpendiculairement à celle-ci et enserrant le stator 5 sur la surface périphérique circulaire externe de celui-ci. Les figure 1 et 2 montrent que la paroi 24 ne recouvre qu'une partie du pourtour du stator 5 en direction axiale.

On comprend de ce qui précède que l'ensemble constitué par le stator 5, le rotor 6, le moyeu 11 et le palier 12 est préassemblé, en usine, dans le carter 15 en l'introduisant du côté ouvert opposé à la paroi 22 et fixé dans celui-ci, puis le carter 15 est fixé au carter d'embrayage par les vis de fixation V.

Par un tel agencement, on obtient un entrefer rigoureusement constant de 0,5mm, ce qui permet d'avoir un excellent rendement de l'équipement électrique.

Le moyeu 11 de support du rotor 6 est relié par l'intermédiaire de moyens d'accouplement à un couvercle d'embrayage 25, qui est solidaire en rotation du volant d'inertie 26 du moteur par des rivets R, le volant étant entraîné par l'arbre vilebrequin 7. Ces moyens d'accouplement, comme cela ressort mieux de la figure 4, comprennent une couronne 27 en matériau élastomère, tel que silicone, comprenant d'un côté un certain nombre d'éléments prismatiques creux à bases rectangulaires 28 axialement saillants en étant circonférentiellement espacés de façon équidistante et s'encastrant respectivement dans des cavités de forme conjuguée 29 réalisées circonférentiellement de façon équidistante dans le moyeu 11.

Les moyens d'accouplement comprennent en outre une couronne rigide métallique 30 comprenant d'un côté des éléments prismatiques à bases rectangulaires 31 faisant saillies en direction axiale en étant circonférentiellement espacés de façon équidistante et s'encastrant respectivement dans les éléments creux 28 de la couronne en élastomère 27 de l'autre côté de cette dernière. La couronne métallique 30 est fixée, par son côté opposé aux éléments saillants 31, au couvercle d'embrayage 25 par l'intermédiaire de rivets passant à travers des perçages 32 de la couronne 30 réalisée dans les parties de liaison entre les éléments saillants 31.

Ainsi, la couronne rigide 30 est de forme conjuguée à la couronne en élastomère 27 et ces deux couronnes sont assemblées dans le moyeu 11 de façon à former un ensemble relativement compact. Les éléments saillants 28 de la couronne en élastomère 27 sont des éléments actifs dans les deux sens de rotation de l'équipement électrique tournant et ont des dimensions suffisantes pour transmettre le couple nécessaire.

La figure 3 montre plus clairement qu'un fourreau 33 est fixé dans la partie centrale 16 du carter 15 et sert de moyen de guidage en translation, à l'intérieur de celui-ci, de la butée de débrayage 34 qui, sur la demi-vue supérieure de la figure 3 est représentée en position de débrayage, tandis qu'en partie inférieure de la figure 3, elle occupe la position d'embrayage. La butée de débrayage 34, comme cela est connu en soi, est déplacée par une fourchette de commande 35 montée à rotation au carter d'embrayage 2 par une articulation à rotule 36 de façon à commander le déplacement en translation de la butée de débrayage 34 qui agit à son extrémité opposée à la fourchette 35 sur un diaphragme d'embrayage DE agissant lui-même sur les plateaux d'embrayage PE. Le circlips 19 de maintien axial du palier 12 est monté dans une gorge radialement externe du fourreau 33.

Le fourreau 33 permettant de guider la butée de débrayage 34 par l'extérieur présente l'avantage par rapport aux solutions connues classiques de ne pas engendrer de vibrations nuisibles. En effet, selon les solutions connues, la butée de débrayage est guidée sur un tube, c'est-à-dire qu'elle coulisse sur ce tube et adapter cette solution à l'invention se serait traduit par une augmentation de la longueur du tube de guidage et, par conséquent, par la production de vibrations.

Les figures 2 et 9 montrent également que le stator 5 est maintenu en position dans le carter 15 par des tirants T situés à l'extérieur de la paroi circulaire 24 du carter 15 en s'étendant parallèlement à celle-ci en étant ancrés d'un côté au carter 15 et traversant du côté opposé une bride annulaire B de façon qu'en serrant les écrous des tirants T, la bride annulaire B plaque axialement le stator 5 sur la face interne de la paroi latérale 22.

Comme cela ressort notamment de la figure 4, le moyen 11 de support du rotor 6 est réalisé en une seule pièce en aluminium. Selon la variante de réalisation représentée aux figures 10 à 12, le moyeu 11 est réalisé à partir de deux flasques en tôle 11a, 11b assemblés l'un à l'autre par des sertissages réalisés au niveau de perçages 11c formés dans les deux flasques. Plus précisément le bord circulaire de chaque perçage de l'un des flasques, par exemple le flasque 11b, est recourbé par déformation pour enserrer le bord circulaire du perçage correspondant de l'autre flasque. Bien entendu, le pourtour externe des deux flasques 11a, 11b constituant le moyeu a une configuration géométrique semblable à celle du pourtour du moyeu 11 faisant l'objet du mode de réalisation décrit précédemment en référence notamment à la figure 1, pour le maintien du rotor 6 sur celui-ci.

Les figures 1 à 10 mettent également en relief la présence d'un circuit de refroidissement de l'équipement électrique 1.

Ce circuit de refroidissement est constitué d'une bande annulaire 39 comprenant une chambre annulaire étanche 37 dans laquelle circule un liquide de refroidissement. Cette bande annulaire est disposée sur la surface périphérique externe circulaire du stator 5.

La figure 9, en liaison avec la figure 2, montre que la bande annulaire 39 est interposée entre la paroi circulaire 24 du carter 15 et la bride B et est maintenue avec un jeu axial entre ces deux parties par les tirants T. On a représenté à la figure 10 la fixation des extrémités de la bande annulaire 39 dans laquelle l'une des extrémités 39a de la bande est solidaire d'un tirant T tandis que son autre extrémité mobile 39b est reliée au tirant T par un ressort R, permettant ainsi de compenser le phénomène de dilatation de la machine électrique.

L'amenée du liquide de refroidissement, telle que de l'eau, dans la chambre de refroidissement 37 s'effectue par une tubulure 40 se raccordant à la bande annulaire 39 et débouchant à travers celle-ci pour être en communication de fluide avec la chambre 37. La sortie du liquide de refroidissement s'effectue par une tubulure 41 également en communication de fluide avec la chambre de refroidissement 37 au travers de la bande annulaire 39.

La figure 14 représente un mode de réalisation des moyens d'accouplement du moyeu de support 11 du rotor 6 au couvercle d'embrayage 25.

Ces moyens d'accouplement comprennent un certain nombre de blocs 42 en matériau élastomère, tel que silicone, qui sont encastrés respectivement dans des cavités conjuguées 43 réalisées circonférentiellement de façon équidistante dans le moyen de support 11.

Le couvercle d'embrayage 25 est solidarisé en rotation au bloc d'élastomère 42 par l'intermédiaire de doigts ou pions 44 solidaires du couvercle d'embrayage 25 s'étendant d'un côté de celui-ci en étant circonférentiellement espacés de façon équidistante. Les doigts 44 sont engagés dans des perçages respectivement des blocs d'élastomère 42 et fixés dans ceux-ci, en s'étendant parallèlement à l'arbre vilebrequin 7, par l'intermédiaire de manchons métalliques 45 fixés dans les blocs d'élastomère qui exercent sur les manchons 45 des efforts radiaux dirigés vers les doigts 44 pour les bloquer dans les manchons 45. Ces derniers sont bien entendu fixés dans leurs cavités correspondantes 43 par emmanchement à force.

La figure 14 montre également que le carter indépendant 15 est fixé au carter d'embrayage 2 par un certain nombre de pions 46, dont un seul est représenté, traversant la paroi latérale 22 du carter 15 et emmanchés à force dans des trous borgnes correspondants du carter d'embrayage 2.

Le dispositif de l'invention décrit dans les premier et second modes de réalisation permet de fixer l'équipement électrique 1 dans le carter d'embrayage 2 en s'affranchissant des problèmes de positionnement d'entrefer de l'équipement et des problèmes de dilatation du carter d'embrayage réalisé en aluminium, lors du fonctionnement de l'équipement électrique. En outre, le préassemblage en usine des différents composants de l'équipement électrique dans le carter indépendant 15 permet un gain de temps de montage appréciable et, par conséquent, une réduction des coûts. De plus, cela a également l'avantage de permettre la vérification du fonctionnement de la machine électrique ainsi que de ses performances.

## Revendications

1. Dispositif de fixation d'un équipement électrique, tel qu'un alternateur-démarreur, dans un carter d'embrayage (2) d'un véhicule automobile, situé entre le carter de boîte de vitesses (3) et le carter moteur (4) du véhicule, l'appareil électrique (1) comprenant un stator (5) fixe relativement au carter d'embrayage (2) et un rotor (6) pouvant être entraîné en rotation par l'arbre vilebrequin (7) du moteur, l'ensemble comprenant le stator (5), le rotor (6) et un moyeu de support (11) du rotor (6) monté sur un palier (12), tel qu'un roulement à billes, logé dans un carter indépendant (15) solidaire du carter d'embrayage (2) **caractérisé en ce que** le carter indépendant (15) est espacé du carter d'embrayage (2).

2. Dispositif selon la revendication 1, **caractérisé en ce que** l'ensemble précité est préassemblé dans le carter indépendant (15) précité avant fixation de ce dernier au carter d'embrayage (2).

3. Dispositif selon la revendication 1 ou 2, **caractérisé en ce que** le palier (12) du moyeu de support (11) du rotor (6) est monté sur une partie centrale cylindrique (16) du carter indépendant (15), entourant coaxialement l'arbre de liaison (17) entre l'arbre vilebrequin (7) et l'arbre d'entrée (18) de la boîte de vitesses.

4. Dispositif selon l'une des revendications précédentes, **caractérisé en ce que** le moyeu de support (11) du rotor (6) est relié par des moyens d'accouplement en rotation (27, 30) à un couvercle d'embrayage (25) solidaire du volant d'inertie (26) du moteur.

5. Dispositif selon la revendication 4, **caractérisé en ce que** les moyens d'accouplement précités comprennent une couronne (27) en matériau élastomère, tel que silicone, ayant d'un côté des éléments prismatiques creux à bases rectangulaires (28), axialement saillants et circonférentiellement espacés, s'encastrant respectivement dans des cavités conjuguées (29) du moyeu de support (11) du rotor (6) et une couronne rigide métallique (30) ayant d'un côté des éléments prismatiques à base rectangulaires (31) axialement saillants, circonférentiellement espacés et s'encastrant respectivement dans les éléments prismatiques creux (28) de la couronne en élastomère (27), la couronne métallique (30) étant solidaire par son côté opposé du couvercle d'embrayage (25).

6. Dispositif selon la revendication 4, **caractérisé en ce que** les moyens d'accouplement précités comprennent des blocs (42) en matériau élastomère, tel que silicone, encastrés respectivement dans des cavités conjuguées circonférentiellement espacées du moyeu de support (11) du rotor (6) et des doigts ou pions (44) solidaires d'un côté du couvercle d'embrayage (25) parallèlement à l'axe de rotation du rotor (6) et circonférentiellement espacés, les doigts ou pions (44) s'engageant respectivement dans des perçages réalisés dans les blocs en élastomère (42).

7. Dispositif dans l'une des revendications 3 à 6, **caractérisé en ce que** le carter indépendant (15) comprend une paroi latérale (22) perpendiculaire à l'arbre vilebrequin (7), raccordée à la partie centrale cylindrique (16) par une paroi oblique (23) et une paroi circulaire (24) s'étendant perpendiculairement à la paroi latérale (22) de façon à définir le logement dans lequel est monté l'ensemble précité par introduction de celui-ci du côté ouvert opposé à la paroi latérale (22).

8. Dispositif selon l'une des revendications précédentes, **caractérisé en ce qu'**il comprend un circuit de refroidissement de l'équipement électrique (1).

9. Dispositif selon la revendication 8, lorsque considérée en combinaison avec la revendication 7, **caractérisé en ce que** le circuit de refroidissement est constitué d'une bande annulaire (39) comprenant une chambre annulaire étanche (37) dans laquelle circule un liquide de refroidissement, la bande métallique annulaire (39) étant disposée sur la surface périphérique du stator (5).

10. Dispositif selon la revendication 9, **caractérisé en ce que** la bande annulaire (39) est interposée entre la paroi circulaire (24) du carter (15) et une bride annulaire (B) de fixation du stator (5) dans le carter (15) et est maintenue entre ces deux parties par des tirants externes (T) et **en ce que** l'une (39a) des extrémités de la bande annulaire (39) est solidaire d'un tirant (T) et son autre extrémité mobile (39b) est reliée au tirant (T) par un ressort (R).

11. Dispositif selon la revendication 9 ou 10, **caractérisé en ce que** le circuit de refroidissement comprend deux tubulures (40, 41) respectivement d'amenée et de sortie du liquide de refroidissement dans la chambre annulaire (37) et raccordées, en communication de fluide, à la bande annulaire (39).

12. Dispositif selon l'une des revendications précédentes, **caractérisé en ce qu'**il comprend un fourreau (33) fixé dans la partie centrale cylindrique (16) du carter indépendant (15) et permettant le guidage en translation d'une butée de débrayage (34).

13. Dispositif selon l'une des revendications précédentes, **caractérisé en ce que** le moyeu de support (11) du rotor (6) est réalisé en une seule pièce, en aluminium.

14. Dispositif selon l'une des revendications 1 à 12, **caractérisé en ce que** le moyeu de support (11) du rotor (6) comprend deux flasques en tôle (11a, 11b) fixés l'un à l'autre par sertissage.

## Patentansprüche

1. Befestigungsvorrichtung für ein elektrisches Gerät, wie ein Starter-Generator, in einem Kupplungsgehäuse (2) eines Kraftfahrzeugs, die sich zwischen dem Getriebegehäuse (3) und dem Motorgehäuse (4) des Fahrzeugs befindet, wobei das elektrische Gerät (1) einen im Verhältnis zum Kupplungsgehäuse (2) feststehenden Stator (5) und einen von der Motorkurbelwelle (7) drehmäßig mitnehmbaren Rotor (6) umfasst, wobei die Anordnung den Stator (5), den Rotor (6) und eine Haltenabe (11) des Rotors (6), die auf einem Lager (12), wie etwa einem Kugellager, das in einem selbstständigen Gehäuse (15) untergebracht ist, das mit dem Kupplungsgehäuse (2) einstückig ist, angebracht ist, umfasst, **dadurch gekennzeichnet, dass** das selbstständige Gehäuse (15) von dem Kupplungsgehäuse (2) beabstandet ist.

2. Vorrichtung nach Anspruch 1, **dadurch gekennzeichnet, dass** die oben genannte Anordnung vor ihrer Befestigung an dem Kupplungsgehäuse (2) in dem oben genannten selbstständigen Gehäuse (15) vormontiert wird.

3. Vorrichtung nach Anspruch 1 oder 2, **dadurch gekennzeichnet, dass** das Lager (12) der Haltenabe (11) des Rotors (6) auf einem zylindrischen Mittelbereich (16) des selbstständigen Gehäuses (15) angebracht ist, wobei es die Verbindungswelle (17) zwischen der Kurbelwelle (7) und der Antriebswelle (18) des Getriebes koaxial umgibt.

4. Vorrichtung nach einem der vorhergehenden Ansprüche, **dadurch gekennzeichnet, dass** die Haltenabe (11) des Rotors (6) über drehmäßige Koppelmittel (27, 30) mit einem Kupplungsdeckel (25) verbunden ist, der mit dem Schwungrad (26) des Motors einstückig ist.

5. Vorrichtung nach Anspruch 4, **dadurch gekennzeichnet, dass** die oben genannten Koppelmittel einen Kranz (27) aus Elastomermaterial, wie etwa Silikon, der auf einer Seite hohle, prismatische Elemente mit rechteckiger Grundlinie (28) aufweist, die axial vorspringend und umfangsmäßig beabstandet sind, wobei sie sich jeweils in die passenden Hohlräume (29) der Haltenabe (11) des Rotors (6) einfügen, und einen starren Metallkranz (30), der auf einer Seite prismatische Elemente mit rechteckiger Grundlinie (31) aufweist, die axial vorspringend, umfangsmäßig beabstandet sind und sich jeweils in die hohlen, prismatischen Elemente (28) des Elastomerkranzes (27) einfügen, umfassen, wobei der Metallkranz (30) über seine dem Kupplungsgehäuse (25) gegenüber liegende Seite einstückig ist.

6. Vorrichtung nach Anspruch 4, **dadurch gekennzeichnet, dass** die oben genannten Koppelmittel Blöcke (42) aus Elastomermaterial, wie etwa Silikon, umfassen, die jeweils in passende, umfangsmäßig beabstandete Hohlräume der Haltenabe (11) des Rotors (6) und Finger oder Zapfen (44), die auf einer Seite des Kupplungsdeckels (25) parallel zu der Drehachse des Rotors (6) einstückig und umfangsmäßig beabstandet sind, eingefügt sind, wobei die Finger oder Zapfen (44) jeweils in Bohrungen eingreifen, die in den Elastomerblöcken (42) ausgeführt sind.

7. Vorrichtung nach einem der Ansprüche 3 bis 6, **dadurch gekennzeichnet, dass** das selbständige Gehäuse (15) eine Seitenwand (22) umfasst, die zu der Kurbelwelle (7) senkrecht ist und über eine schräge Wand (23) und eine kreisförmige Wand (16), die sich senkrecht zu der Seitenwand (22) erstreckt, an den zylindrischen Mittelbereich (16) angeschlossen ist, um die Aufnahme zu bestimmen, in der die oben genannte Anordnung angebracht ist, indem sie von der offenen Seite gegenüber der Seitenwand (22) eingeführt wird,.

8. Vorrichtung nach einem der vorhergehenden Ansprüche, **dadurch gekennzeichnet, dass** sie ein Kühlsystem für das elektrische Gerät (1) umfasst.

9. Vorrichtung nach Anspruch 8, soweit er zusammen mit Anspruch 7 berücksichtigt wird, **dadurch gekennzeichnet, dass** das Kühlsystem aus einem ringförmigen Band (39) besteht, das eine abgedichtete ringförmige Kammer (37) umfasst, in der eine Kühlflüssigkeit fließt, wobei das ringförmige Metallband (39) an der Randoberfläche des Stators (5) angeordnet ist.

10. Vorrichtung nach Anspruch 9, **dadurch gekennzeichnet, dass** das ringförmige Band (39) zwischen der kreisförmigen Wand (24) des Gehäuses (15) und einer ringförmigen Schelle (B) zur Befestigung des Stators (5) in dem Gehäuse (15) eingesetzt ist und zwischen diesen beiden Teilen durch äußere Spannstangen (T) festgehalten wird, und dass eines (39a) der Enden des ringförmigen Bandes (39) mit einer Spannstange (T) einstückig ist und sein anderes bewegliches Ende (39b) über eine Feder (R) mit der Spannstange (T) verbunden ist.

11. Vorrichtung nach Anspruch 9 oder 10, **dadurch gekennzeichnet, dass** das Kühlsystem zwei Stutzen (40, 41) umfasst, jeweils zur Zuführen und Auslaufen der Kühlflüssigkeit in die ringförmige Kammer (37), die zur Flüssigkeitsverbindung an das ringförmige Band (39) angeschlossen sind.

12. Vorrichtung nach einem der vorhergehenden Ansprüche, **dadurch gekennzeichnet, dass** sie eine Hülse (33) umfasst, die in dem zylindrischen Mittelbereich (16) des selbstständigen Gehäuses (15) befestigt ist und die verschiebende Führung eines Auskuppelanschlags (34) ermöglicht.

13. Vorrichtung nach einem der vorhergehenden Ansprüche, **dadurch gekennzeichnet, dass** die Haltenabe (11) des Rotors (6) aus einem Stück Aluminium hergestellt ist.

14. Vorrichtung nach einem der Ansprüche 1 bis 12, **dadurch gekennzeichnet, dass** die Haltenabe (11) des Rotors (6) zwei Blechflansche (11a, 11b) umfasst, die miteinander durch Doppeltfalzen befestigt sind.

## Claims

1. Device for attaching electrical apparatus such as an alternator starter in a clutch housing (2) of a motor vehicle, located between the gear box casing (3) and the crankcase (2) of the vehicle, the electrical apparatus (1) comprising a stator (5) that is fixed in relation to the clutch housing (2) and a rotor (6) which can be set in rotation by the crankshaft (7) of the engine, **characterized in that** the unit comprising the stator (5), the rotor (6) and the means of support (11) of the rotor (6) mounted on a bearing (12), such as a ball bearing, is accommodated in an independent housing (15) that is interdependent with a clutch housing (2), and **in that** there is a gap between the independent housing (15) and the clutch casing (2).

2. Device in accordance with claim 1, **characterized in that** the above-mentioned unit is preassembled in the independent housing (15) before attachment of the latter to the clutch housing (2).

3. Device in accordance with claim 1 or 2, **characterized in that** the bearing (12) of the support means (11) of the rotor (6) is mounted on a central, cylindrical section (16) of the independent housing (15), coaxially surrounding the connection shaft (17) between the crankshaft (7) and the input shaft (18) of the gear box.

4. Device in accordance with one of the preceding claims, **characterized in that** the means of support (11) of the rotor (6) is connected by rotating coupling means of (27, 30) to a clutch cover (25) that is interdependent with the inertia flywheel (26) of the engine.

5. Device in accordance with claim 4, **characterized in that** the said coupling means comprise a collar made of an elastomer such as silicon, having, on one side, hollow, prismatic elements with rectangular bases (28), projecting axially and separated from each other circumferentially and each embedded in corresponding connected cavities (29) of the means of support (11) of the rotor (6), and a rigid, metal collar (30) having, on one side, prismatic elements, with rectangular bases (31), that project axially and are circumferentially spaced and that embed in the hollow, prismatic elements (28) of the elastomeric collar (27), the metal collar (30) being interdependent, by means of its side opposite, with the clutch cover (25).

6. Device in accordance with claim 4, **characterized in that** the said coupling means comprise blocks (42) made of elastomeric material such as silicon, each embedded in connected cavities, spaced circumferentially, of the means of support (11) of the rotor (6) and lifts or slugs (44) that are interdependent with a side of the clutch cover (25) parallel to the axis of rotation of the rotor (6) and circumferentially spaced, the lifts or slugs (44) engaging in corresponding borings in the elastomeric blocks (42).

7. Device in accordance with one of claims 3 to 6, **characterized in that** the independent housing (15) comprises a lateral wall (22), which is perpendicular in relation to the crankshaft (7), connected to the cylindrical, central section (16) by an oblique wall (23) and a circular wall (24) extending perpendicularly in relation to the lateral wall (22), such that it defines the seat in which the said unit is mounted by inserting it on the open side opposite the lateral wall (22).

8. Device in accordance with one of the preceding claims, **characterized in that** it includes a cooling circuit for the electrical equipment (1).

9. Device in accordance with claim 8, combining claim 7, **characterized in that** the cooling circuit is an annular strip (39) comprising a sealed annular chamber (37) in which a cooling liquid circulates, the annular, metal strip (39) being disposed on the peripheral surface of the stator (5).

10. Device in accordance with claim 9, **characterized in that** the annular strip (39) is inserted between the circular wall (24) of the housing (15) and a collar (C) for attaching the stator (5) in the housing (15) and is held between these two sections by external stud bolts (B) and **in that** one (39a) of the ends of the annular strip (39) is interdependent with a stud bolt (B) and its other, mobile, end (39b) is connected to the stud bolt (B) by a spring (S).

11. Device in accordance with claim 9 or 10, **characterized in that** the cooling circuit includes two nozzle pipes (40, 41) respectively for the input and output of cooling liquid to and from the annular chamber (37) and connected, in terms of fluid communication, to the annular strip (39).

12. Device in accordance with one of the preceding claims, **characterized in that** it includes a sheath (33) fixed into the central, cylindrical section (16) of the independent housing (15) and enabling the guiding of displacement of a clutch stop (34).

13. Device in accordance with one of the preceding claims, **characterized in that** the means of support (11) of the rotor (6) is a single piece made of aluminium.

14. Device in accordance with one of claims 1 to 12, **characterized in that** the means of support (11) of the rotor (6) includes two sheet metal end plates (11a, 11b) fixed one to another by tacking and fastening.
